# EUROPÄISCHE PATENTSCHRIFT

(11) **EP 3 324 596 B1**
(45) Veröffentlichungstag und Bekanntmachung des Hinweises auf die Patenterteilung: **04.03.2020**
(21) Anmeldenummer: 16200260.4
(22) Anmeldetag: 23.11.2016
(51) Int. Cl.: H04L 29/06, H04L 9/12, H04L 9/08, H01R 31/06, H01R 24/28

(54) **SCHUTZVORRICHTUNG UND NETZWERKVERKABELUNGSVORRICHTUNG ZUR GESCHÜTZTEN ÜBERTRAGUNG VON DATEN**
PROTECTIVE DEVICE AND NETWORK CABLING DEVICE FOR THE PROTECTED TRANSMISSION OF DATA
DISPOSITIF DE PROTECTION ET DISPOSITIF DE CÂBLAGE DE RÉSEAU DESTINÉ À LA TRANSMISSION PROTÉGÉE DE DONNÉES

(30) Priorität: 17.11.2016 DE 102016222617
(43) Veröffentlichungstag der Anmeldung: 23.05.2018
(73) Patentinhaber: Siemens Aktiengesellschaft, 80333 München (DE)
(72) Erfinder: Falk, Dr. Rainer, 85586 Poing (DE); Fries, Steffen, 85598 Baldham (DE); Seltzsam, Dr. Stefan, 85653 Aying (DE)

(56) Entgegenhaltungen:
- EP-A1- 1 612 989
- WO-A1-02/41599
- WO-A2-2012/173749
- US-A1- 2013 151 844
- US-A1- 2013 305 062
- KENT K SEO BBN TECHNOLOGIES S: "Security Architecture for the Internet Protocol; rfc4301.txt", NETWORK WORKING GROUP RFC 1717, INTERNET SOCIETY (ISOC) 4, RUE DES FALAISES CH- 1205 GENEVA, SWITZERLAND, CH, 1. Dezember 2005 (2005-12-01), XP015043220, ISSN: 0000-0003

## Beschreibung

Die Erfindung bezieht sich auf eine Schutzvorrichtung zur geschützten Übertragung von Daten bestehend aus mindestens zwei einander zugeordneten Schutzeinrichtungen, die jeweils mit einem Ende einer Datenübertragungseinrichtung verbindbar sind sowie eine Netzwerkverkabelungsvorrichtung, die aus einer Schutzvorrichtung und einer Datenübertragungseinrichtung besteht.

Sicherheitsrelevante Daten werden im zunehmenden Maße in Geräten erfasst und über ein Datenkommunikationsnetz übertragen. Sicherheitsrelevante Daten enthalten in vielen Fällen schützenswerte Information, beispielsweise personenbezogene Daten, aber auch Steuerungsnachrichten zur Steuerung von Geräten. Um eine solche Datenkommunikation vor Manipulation und/oder Abhören zu schützen, können miteinander kommunizierende Geräte, wie beispielsweise ein Feldgerät und ein Steuerungsgerät einer Automatisierungsanlage, die Kommunikation kryptographisch schützen, d.h. die Daten verschlüsselt und/oder durch eine kryptographische Prüfsumme geschützt austauschen. Dazu muss jedoch auf den Geräten eine entsprechende Funktionalität verfügbar sein und entsprechend der Einbindung in ein Datenkommunikationsnetzwerk konfiguriert werden. Ist eine entsprechende Funktionalität auf den Geräten selbst nicht verfügbar, können abgesetzte Sicherheitsvorrichtungen, wie beispielsweise Firewalls oder Gateways, dem Gerät vorgelagert werden, die beispielsweise eine virtuelle private Netzwerkverbindung (VPN) für das Gerät aufbauen und die Geräte miteinander verbinden.

Die Druckschrift WO 02/41599 A1 beschreibt ein Schnittstellengerät, z.B. eine Netzwerkkarte, zur sicheren Übertragung von Daten. Diese werden in einem ersten Datenformat in einer ersten Zone empfangen und danach mit einem kryptografisches Verfahren prozessiert. Über eine zweite Schnittstelle werden besagte prozessierte Daten in eine zweite Zone in einem zweiten Datenformat gesendet. Auf diese Weise wird ein unidirektionaler Informationsfluss gewährleistet. In einem zweiten Gerät können die Daten mit einem gleichen Schnittstellengerät im umgekehrten Prozess empfangen werden.

Die Druckschrift US 2013/0151844 beschreibt ein elektronisches Gerät mit zwei physikalisch getrennten Verbindungsschnittstellen. Die erste Schnittstelle tauscht Sicherheitsinformationen mit einem anderen elektronischen Gerät aus, aber keine Nutzlastdaten. Die zweite Schnittstelle ist von der ersten verschieden und kann Nutzlastdaten sicher mit einem anderen elektronischen Gerät austauschen. Dies geschieht in Übereinstimmung mit der Sicherheitsinformation, welche über die erste Verbindung übertragen wurde, überein unsicheres Medium. Somit wird in der Druckschrift eine sichere Datenübertragung über zwei voneinander verschiedenen Schnittstellenverbindungen offenbart.

Die WO 2012/041654 beschreibt beispielsweise eine VPN-Box, welche zumindest einem der Kommunikationspartner zum Aufbau und Betreiben einer virtuellen privaten Netzwerkverbindung zugeordnet ist. Um eine aufwändige Konfiguration dieser VPN-Box zu umgehen, wird dabei beim Verbindungsaufbau ein geheimer Schlüssel des zugeordneten Kommunikationsteilnehmers ermittelt und anhand des geheimen Schlüssels wiederum ein Sitzungsschlüssel eingerichtet. Solche VPN-Boxen werden hauptsächlich bei einer Kommunikationsverbindung über öffentliche Datennetze verwendet.

Aber auch innerhalb von geschlossenen Datennetzwerken sind Kommunikationsverbindungen nur begrenzt schützbar. Nicht überall kann die Netzwerkverkabelung, beispielsweise durch verschließbare Anlagenschränke oder Betriebshallen geschützt werden. In Automatisierungsanlagen, werden bekannte Technologien zum Schutz einer Datenübertragung, insbesondere von Steuerungs-, Überwachungs-, Diagnose- oder Konfigurationsdaten, auch wegen des damit verbundenen Einrichtungs- und Betriebsaufwandes nur punktuell verwendet.

Es ist somit die Aufgabe der vorliegenden Erfindung, eine Manipulations- und/oder Abhör-geschützte Datenübertragung zwischen Geräten einfach, kostengünstig und mit geringem Konfigurationsaufwand bereitzustellen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung eine Schutzvorrichtung zur geschützten Übertragung von Daten, bestehend aus mindestens zwei einander zugeordneten Schutzeinrichtungen, die jeweils mit einem Ende einer Datenübertragungseinrichtung verbindbar sind, wobei jede Schutzeinrichtung eine erste Schnittstelle zum Verbinden mit der Datenübertragungseinrichtung, eine zweite Schnittstelle zum Verbinden mit einem Gerät und eine Kryptoeinheit aufweist, und die Kryptoeinheit eine auf jeder der zugeordneten Schutzeinrichtung äquivalent konfigurierte kryptographische Funktion aufweist, die die zu übertragenden Daten kryptographisch schützt.

Dies hat den Vorteil, dass bei der Einbindung eines Gerätes in ein Datenkommunikationsnetzwerk lediglich die Schutzvorrichtung zusammen mit einer Datenübertragungseinrichtung, beispielsweise einem Netzwerkkabel, einem Lichtwellenleiter oder einer Funkvorrichtung, installiert werden muss, jedoch kein Aufwand für ein Einrichten einer externen Sicherheitsvorrichtung oder für eine Konfiguration einer internen Sicherheitsfunktion erforderlich ist.

Die Kryptoeinheiten der mindestens zwei einander zugeordneten kryptographischen Schutzeinrichtungen sind derart eingestellt, dass nur genau diese Schutzeinrichtungen miteinander kommunizieren können. "Äquivalent konfigurierte kryptographische Funktionen" bedeutet dabei, dass kryptographischen Funktionen in den zugeordneten Schutzeinrichtungen für eine Datenübertragungsrichtung gleich konfiguriert sind. Die kryptographischen Funktionen können für verschiedene Übertragungsrichtungen unterschiedlich konfiguriert sein. Entsprechend können in einer Kryptoeinheit die kryptographischen Funktionen in Sende- und Empfangsrichtung gleich konfiguriert oder unterschiedlich konfiguriert sein.

Die kryptographische Funktion führt insbesondere ein symmetrisches kryptographisches Verfahren mit symmetrischem Schlüssel aus. Der symmetrische Schlüssel kann direkt zur Verschlüsselung oder zum Schutz einer Sessionkeyaushandlung genutzt werden.

Die kryptographische Funktion verschlüsselt bzw. entschlüsselt die zu übertragenden Daten oder sie generiert eine kryptographische Prüfsumme bzw. verifiziert eine kryptographische Prüfsumme.

Insbesondere muss das Gerät selbst keine eigene Sicherheitsfunktion bereitstellen. Die einander zugeordneten Schutzeinrichtungen sind bevorzugt als Steckverbinder ausgebildet, die lösbar als Adapter oder auch fest über die erste Schnittstelle mit der Datenübertragungseinrichtung verbindbar sind. Die Schutzeinrichtungen sind über die zweite Schnittstelle insbesondere direkt mit den kommunizierenden Geräten verbindbar. Die einander zugeordneten Schutzeinrichtungen können aber auch in Steckverbindern als separate Komponente verbaut werden.

Die Kryptoeinheit kann insbesondere als ein Prozessor oder eine elektronische Schaltung ausgebildet sein. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen oder Konfigurationsdaten etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln.

In einer vorteilhaften Ausführungsform weist mindestens eine der Schutzeinrichtungen eine Anzeigeeinheit auf, die ein elektrisches und/oder optisches Statussignal abhängig vom Betriebsstatus der zwischen den Schutzeinrichtungen eingerichteten kryptographischen Verbindung bereit stellt.

Dies hat den Vorteil, dass beispielsweise ein elektrisches Statussignal über die zweite Schnittstelle dem verbundenen Gerät und insbesondere der Netzwerkschnittstelle des Geräts bereitgestellt wird, wenn die kryptographische Verbindung aufgebaut ist. Das Gerät kann beispielsweise erst nach Erhalt des elektrischen Statussignals Daten an die Schutzeinrichtung senden bzw. von der Schutzeinrichtung empfangen. Gleichzeitig oder alternativ auch eine optisches Statussignal erzeugt werden und beispielsweise über eine Leuchtdiode bereitgestellt werden. Dies hat den Vorteil, dass beispielsweise von Installationspersonal ein Kabel nur dann als angesteckt beziehungsweise physikalisch verbunden erkannt wird, wenn die logische Verbindung, das heißt eine geschützte Verbindung des Kabels aufgebaut ist.

In einer vorteilhaften Ausführungsform ist die kryptographische Funktion in den Kryptoeinheiten fest oder änderbar ausgebildet.

Die kryptographische Funktion umfasst beispielsweise einen symmetrischen Schlüssel, die in jeder der zugeordneten Sicherheitseinrichtungen gleich ist. Die kryptographischen Funktion wird beispielsweise bereits bei der Produktion bereitgestellt und in der Kryptoeinheit eingerichtet. Ist die kryptographische Funktion fest, d.h. nicht veränderbar implementiert, ist keinerlei Konfiguration notwendig und der Arbeitsaufwand minimiert.

Ist die kryptographische Funktion änderbar ausgebildet, kann beispielsweise die Länge eines in der kryptographischen Funktion enthaltenen kryptographischen Schlüssels abhängig von den zu verbindenden Geräten eingestellt werden.

Die Einstellung kann beispielsweise durch mechanische Betätigung einer Einstelleinrichtung wie eines Schalters, oder auch durch mechanische Bewegung wie beispielsweise Schütteln geändert werden. Zum Beispiel kann durch eine für beide Schutzeinheiten gleiche mechanische Bewegung Zusatzinformation erzeugt werden, die in die Konfiguration der kryptographischen Funktion einfließt.

In einer vorteilhaften Ausführungsform ver- bzw. entschlüsselt die kryptographische Funktion die Daten auf physikalischer Übertragungsebene gemäß eines OSI-Referenzmodells.

Als OSI-Referenzmodell wird eine Schichtenarchitektur für Netzwerkprotokolle bezeichnet, die von der Internationalen Telekommunikations Union (ITU) und der Internationalen Organisation für Standardisierung (ISO) als Standard veröffentlicht ist. Die kryptographische Funktion auf physikalischer Übertragungsebene, auch als Layer 1 bezeichnet, verursacht nahezu keine Übertragungsverzögerung und ist unabhängig von dem darüber liegenden Übertragungsprotokoll der Sicherungsschicht, auch Layer 2 genannt. Damit ist eine solche kryptographische Funktion beliebig einsetzbar für Internet-basierte Verbindungen, serielle oder Powerline-Verbindungen oder auch für Bus-Systeme.

In einer vorteilhaften Ausführungsform werden die Daten auf physikalischer Übertragungsebene durch einen kryptographischen Spreizcode moduliert.

Dies hat den Vorteil, dass lediglich eine geringe Übertragungsverzögerung entsteht. Es kann beispielsweise der Symboltakt der zu übertragenden Nutzdaten zur Synchronisierung verwendet werden. Durch einen kryptographisch erzeugten Spreizcode ist ein Einbringen von Daten durch einen unerlaubten Dritten kaum möglich, da der verwendete Spreizcode nur mit hohem Aufwand ermittelbar ist. Alternativ kann auch der Spreizcode beispielsweise zeitabhängig geändert werden.

In einer vorteilhaften Ausführungsform ver- bzw. entschlüsselt die kryptographische Funktion die zu übertragenden Daten auf einer Sicherungsschicht gemäß des OSI-Referenzmodells.

Dies hat den Vorteil, dass bekannte und einfach implementierbare kryptographische Funktionen, wie beispielsweise ein MACsec Verfahren verwendet werden können. Andererseits funktioniert eine solche Schutzvorrichtung lediglich mit vorgesehenen Kommunikationsprotokollen, z.B. Ethernet.

In einer vorteilhaften Ausführungsform ver- bzw. entschlüsselt die kryptographische Funktion die zu übertragenden Daten auf einer Vermittlungsschicht des OSI-Referenzmodells.

Dies hat den Vorteil, dass beispielsweise ein IPsec-Protokoll zum Aufbau eines sicheren Datentunnels verwendet werden kann.

In einer vorteilhaften Ausführungsform ist jeder Schutzeinrichtung eine feste IP-Adresse zugeordnet oder eine über die erste Schnittstelle vom angeschlossenen Gerät bereitgestellte IP-Adresse zugeordnet.

Da die IP-Adressen nur den einander zugeordneten Schutzeinrichtungen bekannt sind, sind Kollisionen mit extern vergebenen IP-Adressen auszuschließen. Als IP-Adressen können insbesondere auch IPv6-Link-Local-Adressen durch die Schutzeinrichtungen gewählt und verwendet werden.

In einer vorteilhaften Ausführungsform ver- bzw. entschlüsselt die kryptographische Funktion die zu übertragenden Daten auf einer Transportschicht des OSI-Referenzmodells.

Dies hat den Vorteil, dass beispielsweise ein Tunnel gemäß dem Transport Layer Security-Protokoll beziehungsweise einem Datagramm-Transport Layer Security-Protokoll verwendet werden kann, die insbesondere für TCP beziehungsweise UDP-basierte Kommunikation geeignet sind.

In einer vorteilhaften Ausführungsform gibt die Kryptoeinheit eingehende Daten mit einer fest vorgegebenen zeitlichen Verzögerung oder einer von einer Datenübertragungsart abhängigen Verzögerung aus.

Dies hat den Vorteil, dass keine variable Verzögerungen durch sporadisch auftretende Effekte auftreten können. Dies ist insbesondere bei der Übertragung von Steuerungsdaten oder bei der Zeitsynchronisation von Bedeutung. Es kann eine einzige Verzögerungszeit fest vorgegeben sein. Es können aber auch unterschiedlich Verzögerungszeiten abhängig von einer Datenübertragungsart, wie beispielsweise dem Pakettyp oder einer Paketlänge, vorgegeben sein. Für alle Daten einer Datenübertragungsart ist dann jedoch die Verzögerung fest.

Dies hat den Vorteil, dass keine sporadisch auftretenden Effekte durch variable Verzögerungen auftreten können. Dies ist insbesondere bei Steuerungsaufgaben oder bei der Zeitsynchronisation wichtig. Dadurch hängt die Verzögerung nicht von beispielsweise der Paketlänge ab, das Kabel erscheint einfach wie eine lange Kabelverbindung mit einer entsprechend längeren Übertragungszeit.

In einer vorteilhaften Ausführungsform weist die Schutzeinrichtung eine integrierte Stromquelle auf oder nimmt elektrischen Strom über die erste Schnittstelle von einem angeschlossenen Gerät oder über eine dritte Schnittstelle oder aus dem Datenübertragungssignal selbst auf.

Eine in die Schutzeinrichtung integrierte Stromquelle hat den Vorteil, dass die Schutzeinrichtung unabhängig von den angeschlossenen Geräten arbeitet und auch bei Geräten mit begrenzter Stromversorgung das Gerät nicht belastet. Andererseits hat eine Schutzeinrichtung, die den elektrischen Strom von einem angeschlossenen Gerät aufnimmt, den Vorteil, kompakt ohne zusätzliche eigene Stromquelle ausgebildet sein kann. Eine Stromversorgung über eine dritte Schnittstelle bietet eine optimale Stromversorgung der Schutzeinrichtung ohne das angeschlossene Geräte zu belasten. Des Weiteren ist eine ausreichende Stromversorgung unabhängig vom angeschlossenen Gerät oder einer integrierten eigenen Stromquelle garantiert.

In einer vorteilhaften Ausführungsform weist jede Schutzeinrichtung einer Schutzvorrichtung einen Abzugschutz zum Lösen der ersten Schnittstelle von der Datenübertragungseinheit und/oder zum Lösen der zweiten Schnittstelle vom Gerät auf.

Dies verhindert den Austausch der Schutzeinrichtungen von einer Datenübertragungseinheit, wie beispielsweise einem Netzwerkkabel bzw. am Gerät selbst.

In einer vorteilhaften Ausführungsform löscht die Schutzeinrichtung die kryptographische Funktion, wenn die Schutzeinrichtung außer Betrieb gesetzt wird oder wenn eine Manipulation der Schutzeinrichtung festgestellt wird.

Dies verhindert, dass ein unerlaubter Dritter die kryptographische Funktion ausliest beziehungsweise manipuliert. Vorzugsweise ist die kryptographische Funktion nicht, oder nur mit hohem Aufwand, auslesbar oder manipulierbar.

Gemäß einem zweiten Aspekt betrifft die Erfindung eine Netzwerkverkabelungsvorrichtung umfassend eine Schutzvorrichtung mit den bereits beschriebenen Merkmalen und eine Datenübertragungseinrichtung, wobei die mindestens zwei Enden der Datenübertragungseinrichtung mit jeweils einer Schutzeinrichtung der Schutzvorrichtung verbunden sind.

Dies hat den Vorteil, dass bei einer solchen Netzwerkverkabelungsvorrichtung keine oder nur minimale Konfigurationsaufwände entstehen und somit auch wenig komplexe Geräte ohne große Installations- und Konfigurationsaufwände sicher Daten austauschen können.

In einer vorteilhaften Ausführungsform ist die Datenübertragungseinheit ein Kabel zur Übertragung elektrischer Signale oder ein Glasfaserkabel.

Durch die in der Schutzeinrichtung enthaltene kryptographischen Funktion ist die sichere Übertragung unabhängig von der physikalischen Übertragungsart der Signale möglich. Somit können Kabel für die Übertragung elektrischer Signale oder auch Glasfaserkabel zur Übertragung optischer Signale verwendet werden bei einer zusätzlichen Funkübertragungskomponente in einer Schutzeinrichtung könnte ebenfalls eine Funkbasierte Datenübertragung geschützt werden.

Ausführungsbeispiele der erfindungsgemäßen Schutzvorrichtung beziehungsweise der erfindungsgemäßen Netzwerkverkabelungsvorrichtung sind in den Zeichnungen beispielhaft dargestellt und werden anhand der nachfolgenden Beschreibung näher erläutert.
- Figur 1: zeigt ein Angriffsszenario bei der Verwendung einer Datenübertragungsvorrichtung nach dem Stand der Technik in schematischer Darstellung;
- Figur 2: ein Ausführungsbeispiel einer erfindungsgemäßen Schutzvorrichtung in Blockdarstellung;
- Figur 3: ein Angriffsszenario mit einer herkömmlichen Datenübertragungsvorrichtung und einem Ausführungsbeispiel einer erfindungsgemäßen Schutzvorrichtung in schematischer Darstellung und
- Figur 4: ein Angriffsszenario mit einer erfindungsgemäßen Netzwerkverkabelungsvorrichtung in schematischer Darstellung.

Einander entsprechende Teile sind in allen Figuren mit den gleichen Bezugszeichen versehen.

Kritische Kommunikation, wie beispielsweise Steuerungskommunikation in einem Automatisierungsnetzwerk oder auch einem privaten Netzwerk, wird über Datenkommunikationsnetzwerke übertragen. Miteinander kommunizierende Geräte werden dabei über eine Datenübertragungseinrichtung, beispielsweise ein Netzwerkkabel, das als elektrisches Kabel oder als Glasfaserkabel oder auch als Funkverbindung ausgeprägt ist, übertragen.

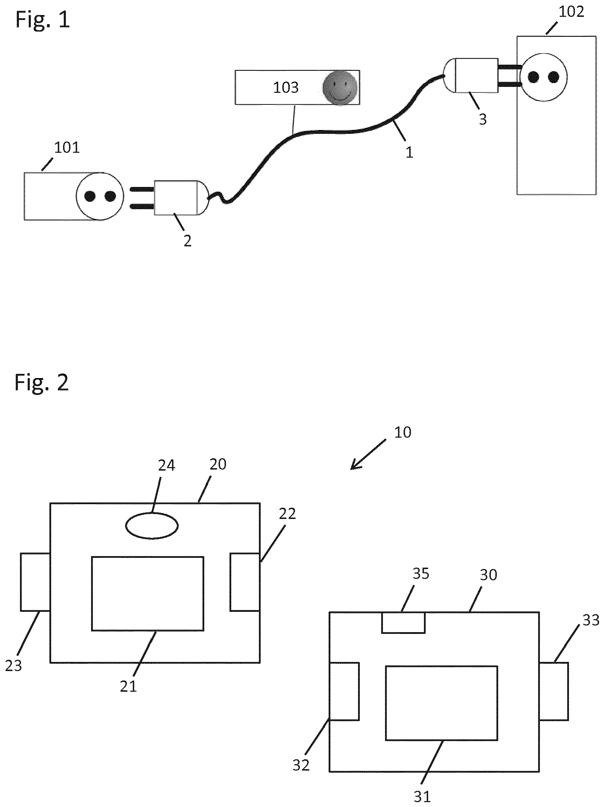

Figur 1 zeigt ein Angriffsszenario bei der Verwendung einer bekannten Datenübertragungseinrichtung 1. Das Gerät 101, beispielsweise ein Feldgerät, ist über die Datenübertragungseinrichtung 1 mit einem zweiten Gerät 102, beispielsweise einer Steuerungsvorrichtung, verbunden. Die Datenübertragungseinrichtung 1 ist beispielsweise ein elektrisches Kabel oder Glasfaserkabel oder eine Funkübertragungsstrecke. Zur Datenübertragung sind Steckverbinder 2, 3 der Datenübertragungseinrichtung 1 mit beispielsweise einer Netzwerkschnittstelle der Geräte 101, 102 verbunden, um eine Verbindung zwischen den beiden Geräten 101, 102 herzustellen.

Befindet sich die gezeigte Anordnung in einer zugänglichen Umgebung, kann ein Angreifer 103 die Datenübertragungseinrichtung 1 beispielsweise auftrennen die übertragenen Daten abhören und/oder gefälschte Datenrahmen einspeisen und somit manipulieren.

Figur 2 zeigt nun eine Schutzvorrichtung 10, die es ermöglicht, eine kryptographisch gesicherte Datenverbindung zwischen den Geräten 101 und 102 zu realisieren, ohne zusätzliche externe oder interne Sicherheitskomponenten zwischenschalten bzw. implementieren zu müssen.

Die Schutzvorrichtung 10 besteht aus mindestens zwei einander zugeordneten Schutzeinrichtungen 20, 30, die beispielsweise als externe Steckverbinder, d.h. Adapter, oder als Komponente in den Steckverbindern 2, 3 einer Datenübertragungseinrichtung 1 verbunden sind, ausgebildet sein können. Jede der Schutzeinrichtungen 20, 30 weist eine erste Schnittstelle 22, 32 auf, die beispielsweise mit einem Netzwerkkabel direkt verbindbar ist. Jede Schutzeinrichtung 20, 30 weist des Weiteren eine zweite Schnittstelle 23, 33 auf, die direkt mit den kommunizierenden Geräten 101, 102 verbindbar, beispielsweise in diese einsteckbar, ist. Die zweite Schnittstelle kann beispielsweise als Ethernet-Stecker ausgebildet sein.

Jede der Schutzeinrichtungen 20, 30 der Schutzvorrichtung 10 umfasst eine Kryptoeinheit 21, 31 auf der jeweils die gleiche kryptographische Funktion ausgebildet ist. Die kryptographische Funktion ist dabei vorkonfiguriert ausgebildet und verschlüsselt die über die zweite Schnittstelle 23 der Schutzeinrichtung 20 eingegangenen Daten und gibt diese über die erste Schnittstelle 22 an eine Datenübertragungseinrichtung aus. Die Schutzeinrichtung 30, die mit dem anderen Ende der Datenübertragungseinrichtung verbunden ist, empfängt die verschlüsselten Daten über die erste Schnittstelle 32 und entschlüsselt die Daten über die in ihrer Kryptoeinheit 31 implementierte kryptographische Funktion. Die entschlüsselten Daten werden über die zweite Schnittstelle 33 an ein angeschlossenes Gerät ausgegeben.

Die kryptographische Funktion kann beispielsweise durch eine Einstellkomponente oder auch durch mechanische Bewegung geändert oder erweitert werden. Beispielsweise ist in der Kryptofunktion jeder der einander zugeordneten Schutzeinrichtungen 20, 30 ein gleicher kryptographischer Schlüssel einer symmetrischen kryptographischen Funktion enthalten, oder ein Schlüsselpaar bei einer asymmetrischen kryptographischen Funktion enthalten und so eingestellt, dass nur genau diese beiden Schutzeinrichtungen miteinander kommunizieren können. Somit ist eine Authentizität des Senders beziehungsweise Empfängers der Daten hier also der einander zugeordneten Schutzeinrichtungen 20, 30 gewährleistet.

Die kryptographische Funktion baut eine Kommunikationsverbindung zwischen den Schutzeinrichtungen 20, 30 auf. Die die Integrität der zu übertragenden Daten kann über Netzwerkprokotolle auf unterschiedlichen Schichten der Kommunikationsverbindung realisiert sein. Mit Schichten der Kommunikationsverbindung sind hier die Übertragungsebenen gemäß dem standardisierten OSI-Referenzmodell für eine Datenübertragung zu verstehen. So kann beispielsweise die kryptographische Funktion durch die Modulation des Datensignals mit einem kryptographischen erzeugten Spreizcode moduliert werden. Die Modulation ist dabei vorzugsweise auf einen Symboltakt der übertragenen Daten synchronisiert. Alternativ kann ein Spreizcode mit deutlich höherer Rate als die Datenrate verwendet werden. Alternativ kann auch die Symbolrate überwacht werden. Die Verwendung von Spreizcodes arbeitet auf der physikalischen Übertragungsebene, also Schicht 1 des OSI-Referenzmodells. Eine solche kryptographische Funktion kann unabhängig von einem darüber liegenden Schicht2-Protokoll eingesetzt werden und ist beispielsweise für Ethernet-basierte Verbindungen, serielle Verbindungen, Verbindungen über ein Stromkabel, sogenannte Powerline-Verbindungen, oder auch für die Datenübertragung über ein Bus-System, wie Profinet, einsetzbar.

Die kryptographische Funktion kann auf der Sicherungsschicht, d.h. Ebene 2 des OSI Referenzmodells, realisiert sein und über Verfahren wie beispielsweise Media Access Code Security MACsec oder dem Schicht2-Transportprotokoll (L2TP) mit IP-Security-Protokoll verwendet werden. Ein Datenkabel mit einer entsprechenden Schutzeinrichtung funktioniert bei einer Ethernet basierten Kommunikation.

Die Kryptoeinheit 21, 31 kann aber auch eine kryptographische Funktion aufweisen, die über ein Protokoll auf Vermittlungsschicht, also Ebene 3 des OSI Referenzmodells, beispielsweise durch das IP-Security-Protokoll im Tunnelmodus realisiert die Datenkommunikation schützt. Die verwendeten IP-Adressen für den Tunnel können beispielsweise der Kryptoeinheit 21, 31 fest zugeordnet sein, oder über die erste Schnittstelle von einem geschlossenen Gerät bereitgestellt werden. Da die IP-Adressen nur den zugeordneten Schutzeinrichtungen bekannt sind, sind Kollisionen mit extern vergebenen IP-Adressen kaum möglich. Als äußere IP-Adressen können dazu insbesondere IPv6-Link-Local-Adressen durch die Schutzeinrichtungen gewählt und verwendet werden. Eine solche kryptographische Funktion kann für jegliche IP-basierte Kommunikationsverbindung verwendet werden.

Die kryptographische Funktion kann auch auf Transportebene, also Ebene 4 gemäß dem OSI-Referenzmodell, beispielsweise mittels Aufbau eines Transport Layer Security TLS Protokolltunnels ausgebildet sein. Eine derartige Schutzvorrichtung kann dann jedoch nur für TCP- beziehungsweise UDP-basierte Kommunikation verwendet werden. In einer weiteren Variante werden IP-Pakete oder Layer-2-Frames über den TLS-Protokolltunnel übertragen.

Die kryptographische Einheit 21, 31 beziehungsweise die darauf implementierte kryptographische Funktion, verschlüsselt vorzugsweise die Daten mit einer festen vorgegebenen Verzögerung. Von einem Gerät 101, 102 über die zweite Schnittstelle 23, 33 empfangene Daten werden entsprechend verzögert verschlüsselt beziehungsweise vor der Ausgabe an das empfangende Gerät verzögert entschlüsselt. Dadurch ist ein deterministisches Verhalten der Datenübertragung gewährleistet, so dass keine sporadisch auftretenden Effekte zu variablen Verzögerungen führen. Die Verzögerung kann unabhängig von der Datenpaketart fest vorgegeben sein. Die Verzögerung kann aber auch von der Art der Datenpakete abhängen, beispielsweise abhängig vom Typ oder Länge der Datenpakete unterschiedlich festgelegt sein. Für eine Datenpaketart ist die Verzögerung dann aber fest eingerichtet. Damit hängt die Verzögerung nicht von beispielsweise der Datenpaketlänge ab.

Mindestens eine der Schutzeinrichtungen 20, 30 einer Schutzvorrichtung 10 weist eine Anzeigeeinheit 24 auf, die einen Status der kryptographisch gesicherten Kommunikationsverbindung anzeigt. So kann beispielsweise ein Fehler bzw. ein Fehlschlagen des gesicherten Verbindungsaufbaus angezeigt werden. Es kann angezeigt werden, dass eine kryptographische Verbindung im Aufbau befindlich ist und es kann insbesondere angezeigt werden, wenn eine sichere Verbindung fertig aufgebaut ist. Dies kann beispielsweise farblich codiert über eine oder mehrere optische Anzeigen wie Leuchtdioden oder auch über ein Display oder aber durch ein akustisches Signal angezeigt werden. Insbesondere erzeugt die Anzeigeeinheit ein elektrisches Signal, das den verbundenen Geräten über die zweite Schnittstelle angezeigt, wenn geschützte Kommunikationsverbindung aufgebaut ist. Somit wird ein Kabel nur dann als eingesteckt beziehungsweise physikalisch verbunden von einer Netzwerkschnittstelle des Geräts 101, 102 erkannt, wenn die logische Verbindung aufgebaut ist.

Eine Versorgung der Kryptoeinheit 21 mit Energie ist beispielsweise als "Power over Ethernet", durch eine direkte Stromversorgung bei Datenübertragung über eine Stromleitungsverbindung mittels Powerline oder die Gewinnung von elektrischer Energie aus Quellen wie Umgebungstemperatur, Vibration oder Luftströmung oder ähnlichem realisiert. In einer Variante enthält mindestens eine Schutzeinrichtung 20, 30 der Schutzvorrichtung 10 eine integrierte Stromquelle wie beispielsweise eine Batterie oder einen Akkumulator. Alternativ ist an zumindest einer der Schutzeinrichtungen 20, 30 eine separat anschließbare Stromversorgung über eine dritte Schnittstelle 35, beispielsweise einem zusätzlichen USB-Anschluss, möglich. In einer Variante wird eine Batterie bzw. Akkumulator bzw. Super-Cap-Kapazitator geladen, wenn eine Stromversorgung über Power over Ethernet oder eine externe Stromversorgung anliegt. Dies hat den Vorteil, dass eine geschützte Datenübertragung auch bei einer Unterbrechung der Stromversorgung möglich ist.

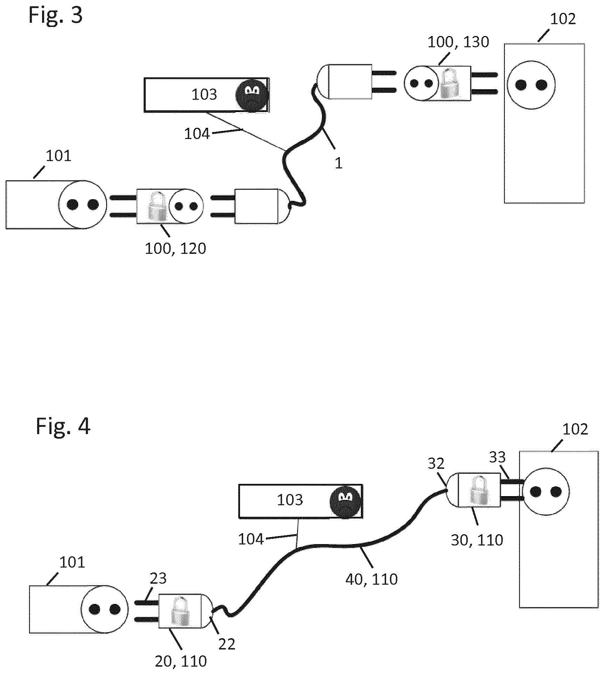

In Figur 3 ist ein Angriffsszenario mit einer herkömmlichen Datenübertragungsvorrichtung 1 in Verbindung mit einer Schutzvorrichtung 100 bestehend aus zwei als Steckverbinder beziehungsweise Adapter ausgebildete Schutzeinrichtungen 120 und 130 dargestellt. Für eine sichere Datenübertragung sind die Schutzeinrichtungen 120, 130 der Schutzvorrichtung 100 jeweils mit einem Ende der Datenübertragungseinrichtung 1 sowie den Geräten 101, 102 verbunden. Die dargestellten Schlösser symbolisieren jeweils die in den Schutzeinrichtungen 120, 130 integrierte Kryptoeinheit. Ein Angreifer 103 kann in diesem Fall weder Daten aus der herkömmlichen Datenübertragungseinrichtung 1 auslesen noch Daten einspeisen.

Die Schutzeinrichtung 20, 30 löscht vorzugsweise die Sicherheitsinformation oder auch die Sicherheitsfunktion, wenn ein physikalischer Manipulationsversuch festgestellt wird beziehungsweise wenn die Schutzvorrichtung beziehungsweise eine der zugeordneten Schutzeinrichtungen außer Betrieb gestellt werden soll.

Figur 4 zeigt ein Angriffsszenario mit einer erfindungsgemäßen Netzwerkverkabelungsvorrichtung 110. Die Netzwerkverkabelungseinrichtung 110 weist jeweils eine Schutzeinrichtung 20, 30 auf, die fest mit einer Datenübertragungsvorrichtung 40 verbunden sind. Die Schutzeinrichtungen 20, 30 können an ein herkömmliches Netzwerkkabel der benötigten Länge befestigt werden oder als komplettes Kabel mit den entsprechenden Schutzeinrichtungen 20, 30 zum Anschluss an die Geräte 101, 102, ausgebildet sein.

Die Schutzeinrichtungen 20, 30 bzw. 120, 130 sind beispielsweise plombierbar mit der Datenübertragungseinrichtung 1 aber auch den Geräten 101, 102 verbunden um ein Lösen der Schutzeinrichtung leicht zu erkennen. Auch kann ein Abziehschutz separat für die zweite Schnittstelle zum Netzwerkanschluss des Geräts 101, 102 und für die erste Schnittstelle zur Datenübertragungseinrichtung 1, 40 oder als Abziehschutz über beide Schnittstellen ausgebildet sein. Es kann auch ein kombinierter Abziehschutz, der sich über die erste und zweite Schnittstelle gemeinsam erstreckt, ausgebildet sein.

Mit einer Schutzeinrichtung 100 beziehungsweise einer Netzwerkverkabelungsvorrichtung 110 die mehr als zwei Schutzeinrichtungen 120, 130 bzw. 20, 30 aufweist, kann beispielsweise in einer Bus-basierten Kommunikation oder einer Broad-/Multicast-Umgebung eine Kommunikationssicherheit zwischen mehreren miteinander verbundenen Geräten gewährleistet werden.

Eine gegenseitige Authentisierung der Schutzeinrichtungen einer Schutzvorrichtung ist ebenfalls durch die gleich vorkonfigurierte kryptographische Funktion gegeben. Lediglich Schutzeinrichtungen, die eine gleich konfigurierte kryptographische Funktion besitzen, können die von einer der Schutzeinrichtungen verschlüsselten Daten auch wieder entschlüsseln und umgekehrt.

Ein kryptographischer Schutz einer Datenübertragung kann somit einfach dadurch erreicht werden, dass eine erfindungsgemäße Netzwerkverkabelungsvorrichtung anstatt eines normalen Netzwerkkabels bzw. normalen Datenübertragungseinrichtung verwendet wird.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Schutzvorrichtung (10) zur geschützten Übertragung von Daten bestehend aus mindestens zwei einander zugeordneten Schutzeinrichtungen (20, 30), die jeweils mit einem Ende einer Datenübertragungseinrichtung (40) verbindbar sind, wobei jede Schutzeinrichtung (20, 30) aufweist:
- eine erste Schnittstelle (22, 32) zum Verbinden mit der Datenübertragungseinrichtung (40),
- eine zweite Schnittstelle (23, 33) zum direkten Verbinden mit einem Gerät (101, 102), und
- eine Kryptoeinheit (21, 31), die eine auf jeder der zugeordneten Schutzeinrichtungen (20, 30) äquivalent konfigurierte kryptographische Funktion aufweist und die zu übertragenden Daten kryptographisch schützt, wobei die kryptographische Funktion eine Kommunikationsverbindung zur Datenübertragung über die Datenübertragungseinrichtung zwischen genau den beiden Schutzeinrichtungen (20,30) aufbaut und
wobei
die Schutzeinrichtungen (20, 30) als externe Steckverbinder oder als Komponenten in den Steckverbindern (2, 3) der Datenübertragungseinrichtung (40) ausgebildet sind.

2. Schutzvorrichtung (10) nach Anspruch 1, wobei mindestens eine der Schutzeinrichtungen (20, 30) eine Anzeigeeinheit (24) aufweist, die ein elektrisches und/oder optisches Statussignal abhängig vom Betriebsstatus der zwischen den Schutzeinrichtungen (20, 30) eingerichteten kryptographischen Verbindung bereitstellt.

3. Schutzvorrichtung (10) nach einem der vorhergehenden Ansprüche, wobei die kryptographische Funktion fest oder änderbar ausgebildet ist.

4. Schutzvorrichtung (10) nach einem der vorhergehenden Ansprüche, wobei die kryptographische Funktion die Daten auf physikalischer Übertragungsebene gemäß eines OSI Referenzmodells kryptographisch schützt.

5. Schutzvorrichtung (10) nach Anspruch 4, wobei die Daten durch einen kryptographischen Spreizcode moduliert werden.

6. Schutzvorrichtung (10) nach einem der vorhergehenden Ansprüche, wobei die kryptographische Funktion die Daten auf einer Sicherungsschicht gemäß des OSI Referenzmodells kryptographisch schützt.

7. Schutzvorrichtung (10) nach einem der vorhergehenden Ansprüche, wobei die kryptographische Funktion die Daten auf einer Vermittlungsschicht gemäß dem OSI Referenzmodells kryptographisch schützt.

8. Schutzvorrichtung (10) nach Anspruch 7, wobei jeder Schutzeinrichtung (20, 30) eine feste IP Adresse zugeordnet ist oder eine über die zweite Schnittstelle (23, 33) vom verbundenen Gerät (101, 102) bereitgestellt IP Adresse zugeordnet ist.

9. Schutzvorrichtung (10) nach einem der vorhergehenden Ansprüche, wobei die kryptographische Funktion die Daten auf einer Transportschicht gemäß dem OSI Referenzmodell kryptographisch schützt.

10. Schutzvorrichtung (10) nach einem der vorhergehenden Ansprüche, wobei die Kryptoeinheit (21, 31) eingehende Daten mit einer fest vorgegebenen zeitlichen Verzögerung oder einer von einer Daten-Übertragungsart abhängigen Verzögerung ausgibt.

11. Schutzvorrichtung (10) nach einem der vorhergehenden Ansprüche, wobei die Schutzeinrichtung (20, 30) eine integrierte Stromquelle aufweist oder elektrischen Strom über die zweite Schnittstelle (23, 33) von einem der angeschlossenen Geräte (20, 30) oder elektrischen Strom über eine dritte Schnittstelle (35) oder elektrischen Strom aus Datenübertragungssignalen selbst aufnimmt.

12. Schutzvorrichtung (10) nach einem der vorhergehenden Ansprüche, wobei die Schutzeinrichtung (20, 30) einen Abzugschutz zum Lösen der ersten Schnittstelle (22, 32) von der Datenübertragungseinheit (40) und/oder zum Lösen der zweiten Schnittstelle (23, 33) vom Gerät (101, 102) aufweist.

13. Schutzvorrichtung (10) nach einem der vorhergehenden Ansprüche, wobei die Schutzeinrichtung (20, 30) die kryptographische Funktion löscht, wenn die Schutzeinrichtung (20, 30) außer Betrieb gesetzt wird oder wenn eine Manipulation der Schutzeinrichtung (20, 30) festgestellt wird.

14. Netzwerkverkabelungsvorrichtung (110) umfassend eine Schutzvorrichtung (10) gemäß einem der Ansprüche 1 bis 13 und eine Datenübertragungseinrichtung (40), wobei die mindestens zwei Enden der Datenübertragungseinrichtung (40) mit jeweils einer Schutzeinrichtung (20, 30) der Schutzvorrichtung (10) verbunden sind und jede Schutzeinrichtung (20, 30) aufweist:
- eine erste Schnittstelle (22, 32) zum direkten Verbinden mit der Datenübertragungseinrichtung (40),
- eine zweite Schnittstelle (23, 33) zum direkten Verbinden mit einem Gerät, und
- eine Kryptoeinheit (21, 31), die eine auf jeder der zugeordneten Schutzeinrichtungen gleich konfigurierte kryptographische Funktion aufweist und die zu übertragenden Daten kryptographisch schützt, wobei die kryptographische Funktion eine Kommunikationsverbindung zur Datenübertragung über die Datenübertragungseinrichtung zwischen genau den beiden Schutzeinrichtungen (20,30) aufbaut
und wobei
die Schutzeinrichtungen (20, 30) als externe Steckverbinder oder als Komponenten in den Steckverbindern (2, 3) der Datenübertragungseinrichtung (40) ausgebildet sind.

15. Netzwerkverkabelungsvorrichtung nach Anspruch 14, wobei die Datenübertragungseinrichtung (40) ein Kabel zur Übertragung elektrischer Signale oder ein Glasfaserkabel ist.

## Claims

1. Protective apparatus (10) for the protected transmission of data, consisting of at least two protective devices (20, 30) which are assigned to one another and can each be connected to one end of a data transmission device (40), each protective device (20, 30) having:
- a first interface (22, 32) for connection to the data transmission device (40),
- a second interface (23, 33) for direct connection to a device (101, 102), and
- a crypto unit (21, 31) which has a cryptographic function configured in an equivalent manner on each of the assigned protective devices (20, 30) and which cryptographically protects the data to be transmitted, the cryptographic function setting up a communications link for data transmission via the data transmission device between precisely the two protective devices (20, 30) and
the protective devices (20, 30) being in the form of external plug connectors or components in the plug connectors (2, 3) of the data transmission device (40).

2. Protective apparatus (10) according to Claim 1, at least one of the protective devices (20, 30) having a display unit (24) which provides an electrical and/or optical status signal on the basis of the operating status of the cryptographic connection set up between the protective devices (20, 30).

3. Protective apparatus (10) according to one of the preceding claims, the cryptographic function being fixed or changeable.

4. Protective apparatus (10) according to one of the preceding claims, the cryptographic function cryptographically protecting the data on a physical transmission level according to an OSI reference model.

5. Protective apparatus (10) according to Claim 4, the data being modulated by means of a cryptographic spreading code.

6. Protective apparatus (10) according to one of the preceding claims, the cryptographic function cryptographically protecting the data on a data link layer according to the OSI reference model.

7. Protective apparatus (10) according to one of the preceding claims, the cryptographic function cryptographically protecting the data on a network layer according to the OSI reference model.

8. Protective apparatus (10) according to Claim 7, each protective device (20, 30) being assigned a fixed IP address or an IP address provided by the connected device (101, 102) via the second interface (23, 33).

9. Protective apparatus (10) according to one of the preceding claims, the cryptographic function cryptographically protecting the data on a transport layer according to the OSI reference model.

10. Protective apparatus (10) according to one of the preceding claims, the crypto unit (21, 31) outputting incoming data with a firmly predefined time delay or a delay dependent on a type of data transmission.

11. Protective apparatus (10) according to one of the preceding claims, the protective device (20, 30) having an integrated current source or drawing electrical current from one of the connected devices (20, 30) via the second interface (23, 33) or drawing electrical current via a third interface (35) or drawing electrical current from data transmission signals themselves.

12. Protective apparatus (10) according to one of the preceding claims, the protective device (20, 30) having withdrawal protection for releasing the first interface (22, 32) from the data transmission unit (40) and/or for releasing the second interface (23, 33) from the device (101, 102).

13. Protective apparatus (10) according to one of the preceding claims, the protective device (20, 30) cancelling the cryptographic function if the protective device (20, 30) is disabled or if manipulation of the protective device (20, 30) is determined.

14. Network cabling apparatus (110) comprising a protective apparatus (10) according to one of Claims 1 to 13 and a data transmission device (40), the at least two ends of the data transmission device (40) being connected to one protective device (20, 30) of the protective apparatus (10) in each case, and each protective device (20, 30) having:
- a first interface (22, 32) for direct connection to the data transmission device (40),
- a second interface (23, 33) for direct connection to a device, and
- a crypto unit (21, 31) which has a cryptographic function configured in an identical manner on each of the assigned protective devices and which cryptographically protects the data to be transmitted, the cryptographic function setting up a communications link for data transmission via the data transmission device between precisely the two protective devices (20, 30) and
the protective devices (20, 30) being in the form of external plug connectors or components in the plug connectors (2, 3) of the data transmission device (40).

15. Network cabling apparatus according to Claim 14, the data transmission device (40) being a cable for transmitting electrical signals or a fiber-optic cable.

## Revendications

1. Dispositif de protection (10) destiné à la transmission protégée de données, composé d'au moins deux équipements de protection (20, 30) associés l'un à l'autre qui peuvent être reliés respectivement à une extrémité d'un équipement de transmission de données (40), chaque équipement de protection (20, 30) comportant :
- une première interface (22, 32) pour connexion à l'équipement de transmission de données (40),
- une deuxième interface (23, 33) pour connexion directe à un appareil (101, 102) et
- une unité cryptographique (21, 31) qui comporte une fonction cryptographique configurée de manière équivalente sur chacun des équipements de protection associés (20, 30) et protège cryptographiquement les données à transmettre, la fonction cryptographique établissant une liaison de communication pour la transmission de données via l'équipement de transmission de données entre exactement les deux équipements de protection (20,30) et
les équipements de protection (20, 30) étant réalisés en tant que connecteurs externes ou en tant que composants dans les connecteurs (2, 3) de l'équipement de transmission de données (40).

2. Dispositif de protection (10) selon la revendication 1, au moins l'un des équipements de protection (20, 30) comportant une unité d'affichage (24) qui fournit un signal d'état électrique et/ou optique en fonction de l'état de fonctionnement de la liaison cryptographique ménagée entre les équipements de protection (20, 30).

3. Dispositif de protection (10) selon l'une des revendications précédentes, la fonction cryptographique étant réalisée à demeure ou de manière modifiable.

4. Dispositif de protection (10) selon l'une des revendications précédentes, la fonction cryptographique protégeant cryptographiquement les données au niveau de transmission physique selon un modèle de référence OSI.

5. Dispositif de protection (10) selon la revendication 4, les données étant modulées par un code d'étalement cryptographique.

6. Dispositif de protection (10) selon l'une des revendications précédentes, la fonction cryptographique protégeant cryptographiquement les données sur une couche de sécurité selon le modèle de référence OSI.

7. Dispositif de protection (10) selon l'une des revendications précédentes, la fonction cryptographique protégeant cryptographiquement les données sur une couche de commutation selon le modèle de référence OSI.

8. Dispositif de protection (10) selon la revendication 7, à chaque équipement de protection (20, 30) étant associée une adresse IP fixe ou une adresse IP fournie via la deuxième interface (23, 33) par l'appareil connecté (101, 102).

9. Dispositif de protection (10) selon l'une des revendications précédentes, la fonction cryptographique protégeant cryptographiquement les données sur une couche de transport selon le modèle de référence OSI.

10. Dispositif de protection (10) selon l'une des revendications précédentes, l'unité cryptographique (21, 31) émettant des données entrantes avec un décalage temporel donné fixe ou un retard fonction d'un mode de transmission de données.

11. Dispositif de protection (10) selon l'une des revendications précédentes, l'équipement de protection (20, 30) comportant une source de courant intégrée ou absorbant lui-même du courant électrique de l'un des appareils raccordés (20, 30) via la deuxième interface (23, 33) ou du courant électrique via une troisième interface (35) ou du courant électrique de signaux de transmission de données.

12. Dispositif de protection (10) selon l'une des revendications précédentes, l'équipement de protection (20, 30) comportant une protection anti-retrait pour détacher la première interface (22, 32) de l'unité de transmission de données (40) et/ou pour détacher la deuxième interface (23, 33) de l'appareil (101, 102).

13. Dispositif de protection (10) selon l'une des revendications précédentes, l'équipement de protection (20, 30) supprimant la fonction cryptographique lorsque l'équipement de protection (20, 30) est mis hors service ou qu'une manipulation de l'équipement de protection (20, 30) est constatée.

14. Dispositif de câblage de réseau (110) comprenant un dispositif de protection (10) selon l'une des revendications 1 à 13 et un équipement de transmission de données (40), les au moins deux extrémités de l'équipement de transmission de données (40) étant reliées respectivement à un équipement de protection (20, 30) du dispositif de protection (10) et chaque équipement de protection (20, 30) comportant :
- une première interface (22, 32) pour connexion directe à l'équipement de transmission de données (40),
- une deuxième interface (23, 33) pour connexion directe à un appareil et
- une unité cryptographique (21, 31) qui présente une fonction cryptographique configurée identiquement sur chacun des équipements de protection associés et protège cryptographiquement les données à transmettre, la fonction cryptographique établissant une liaison de communication pour la transmission de données via l'équipement de transmission de données entre exactement les deux équipements de protection (20,30) et
les équipements de protection (20, 30) étant réalisés en tant que connecteurs externes ou en tant que composants dans les connecteurs (2, 3) de l'équipement de transmission de données (40).

15. Dispositif de câblage de réseau selon la revendication 14, l'équipement de transmission de données (40) étant un câble pour la transmission de signaux électriques ou un câble en fibre de verre.
